# EUROPÄISCHE PATENTANMELDUNG

(11) **EP 4 567 188 A2**
(43) Veröffentlichungstag der Anmeldung: **11.06.2025**
(21) Anmeldenummer: 24189856.8
(22) Anmeldetag: 19.07.2024
(51) Int. Cl.: D06N 3/00, D06N 3/14, D06N 3/12

(54) **MEHRSCHICHTVERBUND AUF DER BASIS VON POLYAMIDEN ALS SCHICHTBILDENDEN MATERIALIEN UND STREICHBARE POLYAMIDZUSAMMENSETZUNGEN AUF WÄSSRIGER BASIS ZUR HERSTELLUNG SOLCHER MEHRSCHICHTVERBUNDE**

(30) Priorität: 08.08.2023 DE 102023207622
(71) Anmelder: Benecke-Kaliko AG, 30419 Hannover (DE)
(72) Erfinder: Neumann, Thorsten, 30419 Hannover (DE); Heckel, Andreas, 30419 Hannover (DE); Wittmann, Gabriele, 74679 Weissbach (DE)
(74) Vertreter: Preusser, Andrea

(57) **Zusammenfassung**

Die vorliegende Erfindung betrifft einen Mehrschichtverbund mit einer geschäumten oder kompakten Polyamidschicht und einem textilen Träger aus Polyamid, wobei die in dem Mehrschichtverbund enthaltenen Polymere zu mindestens 90 Gew.-% auf Polyamid oder Polyamid und thermoplastischen Polyurethan beruhen. Ein solcher Mehrschichtverbund zeichnet sich durch eine vorteilhafte Beständigkeit gegenüber Lösungsmitteln und Ölen, sowie eine hohe Abriebbeständigkeit aus, was das Material für Anwendungen insbesondere im Automobilbereich geeignet macht. Die vorliegende Erfindung betrifft weiterhin ein Verfahren zur Herstellung eines solchen Mehrschichtverbundes, eine Streichbare Polyamidmasse auf wässriger Basis, die zweckmäßig für die Herstellung eines solchen Mehrschichtverbundes verwendet werden kann, sowie die Verwendung solcher Mehrschichtverbunde zu Herstellung als Kunstleder zum Bezug von Oberflächen.

## Beschreibung

Die vorliegende Erfindung betrifft einen Mehrschichtverbund mit einer geschäumten oder kompakten Polyamidschicht und einem textilen Träger aus Polyamid, wobei die in dem Mehrschichtverbund enthaltenen Polymere zu mindestens 90 Gew.-% auf Polyamid oder Polyamid und thermoplastischen Polyurethan beruhen. Die vorliegende Erfindung betrifft weiterhin ein Verfahren zur Herstellung eines solchen Mehrschichtverbundes, eine streichbare Polyamidmasse auf wässriger Basis, die zweckmäßig für die Herstellung eines solchen Mehrschichtverbundes verwendet werden kann, sowie die Verwendung eines solchen Mehrschichtverbunds als Kunstleder zum Bezug von Oberflächen.

### Stand der Technik

Kunstleder finden heute vor allem im Bereich des Fahrzeugbaus und für Oberflächenbezüge z.B. von Möbeln eine breite Anwendung. Kunstleder bestehen aus mehreren Schichten, deren äußere Oberfläche den Nutzer den Eindruck eines Leders vermitteln soll, und wobei die Schichten in dem Kunstleder unterschiedliche Funktionen erfüllen. Ein Kunstleder besteht in den meisten Fällen aus einer aus einem Polymer gebildeten Oberflächenschicht und einem Trägermaterial, insbesondere aus Textil, Vlies oder einem geschäumten Material, z.B. aus PVC, Polyolefin oder Polyurethan. Die aus dem Polymer gebildete Deckschicht ist für die Abrieb- und Stofffestigkeit verantwortlich und bestimmt das Aussehen, während der Träger die gewünschte Festigkeit und Dehnbarkeit vermittelt. Als Beschichtungspolymere werden u.a. Polyurethane, aber bei weniger anspruchsvollen Anwendungen auch PVC oder Olefine eingesetzt. Konventionell verwendete Trägermaterialien sind z.B. Polyester-, Polyamid-, Baumwoll- oder Mischtextilien. Ersichtlich sind konventionelle Kunstleder daher aus einer Reihe von unterschiedlichen Materialien gebildet.

In den letzten Jahren haben die Thematiken Recycling und Sustainability/Nachhaltigkeit mehr und mehr an Bedeutung gewonnen, bei denen es darum geht, einem Material nach einer ersten Nutzung ein zweites Leben in einem ähnlichen oder anderen Produkt zu ermöglichen. Auf diese Weise sollen natürliche Ressourcen geschont werden. Bisher bekannte Ausgestaltungen von Kunstledern erweisen sich hierfür als problematisch, weil sie einen textilen Träger enthalten, der sich chemisch von den darauf aufgebrachten Schichten unterscheidet. Eine solche chemisch uneinheitliche Materialkombination kann nur mit erhöhtem Aufwand und unzureichend wiederverwendet werden, da der textile Träger zunächst von den weiteren Schichten getrennt werden muss, bevor im Anschluss die getrennten Fraktionen separat recycelt werden können. Dies ist aufwändig, kostenintensiv und wirtschaftlich unrentabel.

Um diesen Aufwand zu vermeiden wurde der Ansatz verfolgt, die chemisch uneinheitliche Materialkombination des Kunstleders nicht zu trennen, sondern mechanisch so weit zu zerkleinern, dass die erhaltenen Partikel als Füllstoff in geeigneten Homopolymere eingearbeitet werden können. Da die Zahl der hierfür geeigneten Anwendungen aber begrenzt ist, stellt dies für die großen Mengen an Kunstledern, die jährlich anfallen und produziert werden, keine ist geeignete Lösung dar. Darüber hinaus werden hochwertige Kunststoffe in minderwertige Füllstoffe überführt, was aus materialökonomischer Sicht verbesserungswürdig erscheint.

Die DE 10 2020 211 685 A1 schlägt zur Bereitstellung von leichter rezyklierbaren Kunstledern eine Bildung von Kunstleder mit einem Polyestergewebe und einer Oberflächenschicht vor, die ebenfalls aus Polyester gebildet ist. Derartige Kunstleder sollen durch eine Verarbeitung in einem Kalander oder Extruder auf einfache Weise wiederaufgeschmolzen und in eine neue Form und Anwendung überführt werden können. Ein Nachteil von Kunstledern auf Basis von Polyestern besteht allerdings in deren nur unzureichenden Beständigkeit gegenüber Lösungsmittel (wie Benzin) und migrierenden Substanzen wie Ölen, die durch den Benutzer z.B. als Sonnencreme auf die Kunstlederoberfläche aufgebracht werden können, wenn das Kunstleder z.B. als Lenkradüberzug verwendet wird. Viele Polyester weisen zudem keine ausreichende Beständigkeit und Festigkeiten bei starker Beanspruchung (d.h. Reißfestigkeit und Abriebbeständigkeit) auf.

Ein Material, dass im Vergleich zu Polyester eine gute Beständigkeit gegenüber Lösungsmitteln und Ölen aufweist ist Polyamid. Polyamid hat zudem den Vorteil einer meist sehr hohen Festigkeit und Steifigkeit, was sich in hervorragenden Beständigkeit gegenüber Abrieb zeigt. Während Gewebe aus Polyamid schon seit langem bekannt sind und genutzt werden, sind bisher keine kommerziell in großem Rahmen einsetzbaren Verfahren bekannt, mit denen kompakte Schichten aus Polyamid, wie sie in Kunstledern z.B. als Deckschicht verwendet werden, hergestellt werden können.

Aus der US 3,540,916 A ein Verfahren bekannt, bei dem eine Mischung aus Polyamid und Polyurethan in einem Lösungsmittel wie Dimethylformamid gelöst, in ein Gewebe imprägniert und dort anschließend durch Kontaktierung mit Wasser aus der Lösung ausgefällt wird. Dabei verbleibt das Polyamid und Polyurethan in dem Gewebe. Alternativ können als Lösungsmittel auch Diethylformamid, Dimethylsulfoxid, Tetramethylharnstoff, Tetrahydrofuran oder Acetonitril eingesetzt werden. Anderseits ist ersichtlich, dass ein solches Verfahren nicht wirtschaftlich zur Herstellung von kompakten Schichten verwendet werden kann, wie man sie gewöhnlich in Kunstledern findet.

Eine weitere Möglichkeit der Herstellung von Polyamidschichten besteht in einer Pulverbeschichtung, bei der ein elektrisch leitfähiger Werkstoff mit Pulverlack beschichtet wird, um den Werkstoff gegen Umwelteinflüsse zu schützen. Da andererseits aber Kunstleder keine elektrisch leitfähigen Werkstoffe enthalten, ist die Pulverbeschichtung keine mögliche Option für die Herstellung von Kunstledern.

Es besteht daher ein Bedarf für Kunstleder mit gegenüber konventionellen Kunstledern verbesserter Recyclingfähigkeit und gegenüber den bekannten Kunstledern auf Basis von Polyestern verbesserter Lösemittel und Ölbeständigkeit und verbesserten Festigkeiten.

### Beschreibung der Erfindung

In den der hier angegebenen Erfindung zugrundeliegenden Untersuchungen wurde überraschend gefunden, dass sich kompakte Polyamidschichten aus einer Dispersionsmasse von Polyamidpartikeln in Wasser herstellen lassen. Dabei wird zunächst aus Polyamid in Partikelform eine pastöse Mischung in Wasser als Träger hergestellt, die ähnlich wie konventionelle Polymermassen zur Herstellung von kompakten oder geschäumten Schichten, beispielsweise durch ein Streich- oder Rakelverfahren, auf üblichen Produktionsanlagen verarbeitet werden können. Aus diesen Schichten kann in der Folge durch Behandlung bei erhöhter Temperatur das Wasser entfernt und so eine einheitliche Polyamidschicht hergestellt werden. Diese kann dann entweder z.B. durch Anschmelzen mit einem Polyamidgewebe verbunden werden, oder die Schicht kann direkt auf einem Polyamidgewebe erzeugt werden, indem das in der Schicht verwendetet Polyamid so ausgewählt wird, dass es einen geringeren Schmelzpunkt aufweist als das Polyamidgewebe.

In diesem Zusammenhang wurde weiterhin gefunden, dass sich die Anwesenheit geringer Mengen an thermoplastischem Polyurethan in dem Polyamid nicht relevant schädlich auf die Schmelz- und Recyclefähigkeit der so erzeugten Schichtgebilde auswirkt, aber eine Optimierung von Eigenschaften in dem Gebilde erlaubt.

Gemäß einem ersten Aspekt betrifft die vorliegende Erfindung demzufolge einen Mehrschichtverbund mit einer geschäumten oder kompakten Polyamidschicht und einem textilen Träger aus Polyamid, wobei die in dem Mehrschichtverbund enthaltenen Polymere zu mindestens 90 Gew.-% auf Polyamid oder Polyamid und thermoplastischen Polyurethan beruhen. Ein solcher Mehrschichtverbunde kann, ohne dass hierzu erst eine Trennung der in dem Verbund verarbeiteten einzelnen Schichten erforderlich ist, durch aufschmelzen in ein einheitliches Produkt umgewandelt werden, dass dann zur Herstellung von neuen Produkten verwendet werden kann.

Der textile Träger in dem erfindungsgemäßen Mehrschichtverbund kann im Prinzip aus jedem Polyamid gebildet sein, aus dem Fasern oder Gewebe hergestellt werden können. Beispielhaft als geeignet zu nennende Polyamide sind unter anderem PA 6, PA 6.6, PA 6.10, PA 6.12, PA 11, PA 12, oder Polycaprolactam. Eine weitere Gruppe von Polyamiden, aus denen der textile Träger gebildet sein kann, sind Polyamide auf Basis von durch biologische oder biotechnologische Verfahren herstellbaren Disäuren und Diaminen wie Bernsteinsäure, Adipinsäure, Azelainsäure, Sebacinsäure und Dodecandicarbonsäure, in Kombination mit Pentamethylendiamin oder Decamethylendiamin, oder Polyamide aus Caprolactam und Aminoundecansäure und Polyamide, die aus mehreren der in den vorstehend genannten Polyamiden enthaltenen Monomere gebildet sind. als Bevorzugte Polyamide, aus denen der textile Träger gebildet ist, sind PA 6, PA 6.6, PA 6.10 oder PA 6.12 zu nennen. Der textile Träger bezeichnet in diesem Fall regelmäßige Textilien wie Gestricke, Gewirke, Gelege, oder Gewebe, aber auch Textilien, in denen die Fasern unregelmäßig angeordnet sind, wie beispielsweise ein Vlies. Für den textilen Träger ist hierbei allein maßgeblich, dass er als einheitliche flächige Schicht aus Polyamidfasern ausgebildet ist.

Das Flächengewicht des textilen Trägers kann in weiten Bereichen variieren, wobei es bevorzugt ist, wenn das Flächengewicht in einem Bereich von 80 bis 400 g/m² und insbesondere 150 bis 370 g/m² eingestellt ist. Auf diese Weise weist der textile Träger einerseits eine für die Anwendung als Kunstleder geeignete Festigkeit auf und andererseits wird das Material noch kosteneffizient eingesetzt.

Im Vorstehenden wurde bereits angegeben, dass die in dem Mehrschichtverbund enthaltenen Polymere zu mindestens 90 Gew.-% auf Polyamid oder Polyamid und thermoplastischen Polyurethan beruhen sollen. Bevorzugt im Sinne einer Verarbeitung durch einschmelzen ist dabei ein Anteil von mindestens 95 Gew.-%, und weiter bevorzugt mindestens 98 Gew.-%. Da das thermoplastische Polyurethan im Wesentlichen bei der Einstellung der Eigenschaften Vorteile vermittelt, ist es zudem bevorzugt, wenn der textilen Träger nur aus Polyamid gebildet ist, und das erfindungsgemäße Verbundgebilde thermoplastisches Polyurethan nur als Bestandteil der geschäumten oder kompakten Polyamidschicht enthält. Für diese ist es im Sinne einer wünschenswerten Recyclingfähigkeit bevorzugt, wenn der Anteil des thermoplastischen Polyurethans höchstens etwa 30 Gew.-%, weiter bevorzugt höchstens etwa 20 Gew.-% und noch weiter bevorzugt höchstens etwa 10 Gew.-% der Gesamtmenge an Polymeren in der geschäumten oder kompakten Polyamidschicht ausmacht.

Das Polyamid, dass die geschäumte oder kompakten Polyamidschicht ausbildet, unterliegt keinen relevanten Beschränkungen mit der Maßgabe, dass es unter Bedingungen schmelzbar ist, bei denen kein signifikanter Abbau des Polyamids beobachtet wird. Aus diesem Grund sind aromatischen Polyamide für eine Verwendung in den erfindungsgemäßen Mehrschichtgebilden weniger geeignet, und es ist bevorzugt, wenn es sich bei dem Polyamid in der geschäumten oder kompakten Polyamidschicht um ein aliphatisches Polyamid handelt. Das aliphatische Polyamid kann geringe Mengen an aromatischen Bestandteilen enthalten, diese sollten allerdings nicht mehr als 10 Gew.-%, bevorzugt nicht mehr als 5 Gew% und weiter bevorzugt nicht mehr als 2 Gew.-% des Gesamtgewichts des Polyamids ausmachen. Zu den aromatischen Bestandteilen werden die Aromaten selbst und gegebenenfalls mit diesen verbundenen Gruppen gezählt, die nicht Teil der polymeren Kette des Polyamids sind. Ganz besonders bevorzugt ist es, wenn das Polyamid nur aus aliphatischen Bestandteilen gebildet ist.

Polyamide, aus denen die geschäumte oder kompakte Polyamidschicht gebildet ist, sind bevorzugt aus der gleichen Gruppe von Polyamiden ausgewählt, die vorstehend bereits als Polyamide für den textilen Träger genannten wurde, d.h. das Polyamid ist bevorzugt ausgewählt aus der Gruppe umfassend PA 6, PA 6.6, PA 6.10, PA 6.12, PA 11, PA 12, oder Polycaprolactam, sowie Polyamiden auf Basis von durch biologische oder biotechnologische Verfahren herstellbaren Disäuren und Diaminen wie Bernsteinsäure, Adipinsäure, Azelainsäure, Sebacinsäure und Dodecandicarbonsäure, in Kombination mit Pentamethylendiamin oder Decamethylendiamin, oder Polyamide aus Caprolactam und Aminoundecansäure und Polyamide, die aus mehreren der in den vorstehend genannten Polyamiden enthaltenen Monomere gebildet sind. Durch die Verwendung von biologischen oder biotechnologischen Verfahren zur Herstellung von Polymiden kann ein hoher biologischer Anteil von bis zu 100% realisiert werden, was in Bezug auf die angestrebte Sustainability/Nachhaltigkeit wünschenswert ist.

Die genannten Materialien lassen sich gut in partikulärer Form herstellen und verarbeiten und, falls erforderlich, über den Zusatz von dispersionsstabilisierenden Mitteln zu streichbaren Pasten konfektionieren.

Die genannten Polyamide können in Form eines spezifischen Polyamidtyps, z.B. PA 6.6 in der geschäumten oder kompakten Polyamidschicht vorliegen oder als Gemisch mehrerer dieser Polyamidtypen. Es ist darüber hinaus möglich, dass in der Polyamidschicht zusätzlich ein thermoplastisches Polyurethan vorliegt, dass dem Polyamid optimierte Eigenschaften wie Weichheit oder Resistenzen gegenüber mechanischen und chemischen Einflüssen vermittelt. Ein thermoplastisches Polyurethan, dass als Polyurethandispersion zur Herstellung der Polyamidschicht einbezogen wird, kann auch als Ersatz von Seifen und Tensiden verwendet werden, wenn die Polyamidschicht aus einer wässrigen Dispersion hergestellt wird. Thermoplastische Polyurethane, die zu diesem Zweck in die Polyamidschicht einbezogen sind, können auf Polyisocyanaten und Polyesterpolyolen, Polyetherpolyolen oder Polycarbonatpolyolen beruhen und es kann sich im rein aliphatische thermoplastische Polyurethane oder thermoplastische Polyurethane mit aromatischem Anteil handeln. Es ist darüber hinaus möglich, dass die thermoplastischen Polyurethane zusätzlich zu Urethangruppen Harnstoffgruppen enthalten, die durch eine partielle Hydrolyse von Isocyanatgruppen und anschließende Reaktion mit weiteren Isocyanatgruppen oder durch eine Zugabe von Aminen, z.B. zur Kettenverlängerung der Polyurethane erzeugt werden können.

Sofern Polyamidcopolymere für die Herstellung der kompakten oder geschäumten Polyamidschicht verwendet werden, die beispielsweise Anteile von oligo- und polymeren Glycolen enthalten, können streichbare monolithische Membranen hergestellt werden, die nicht luftdurchlässig sind, dafür aber Feuchtigkeits- und Wasserdampfdurchlässig. Auf diese Weise können funktionale Schichten generiert, werden, die Winddichtheit und Wasserdichtigkeit durch eine entsprechend hohe Wassersäule aufweisen und somit kein Wasser hindurch lassen, jedoch die Möglichkeit bieten, für Feuchtigkeit über Dampfdruckgefälle permeabel zu sein.

Für die Herstellung der Polyamidschicht kommt weiterhin auch dem Schmelzpunkt des Polyamids eine gewisse Bedeutung zu, wenn die Schicht durch ein Sintern einer Masse aus kleineren Polyamidpartikel hergestellt wird. Als bevorzugte Schmelz- bzw. Sintertemperatur, die das Polyamid zur Herstellung der geschäumten oder kompakten Polyamidschicht aufweist, kann hierbei ein Temperaurbereich von 160°C bis 240°C angegeben werden. In einer Ausführungsform hat das Polyamid zu Herstellung der geschäumten oder kompakten Polyamidschicht eine um mindestens 20°C, bevorzugt mindestens 30°C und weiter bevorzugt mindestens 40°C geringere Schmelztemperatur als die Schmelztemperatur des textilen Trägers. Auf diese Weise kann der Mehrschichtverbund mit einer direkten Verbindung der geschäumten oder kompakten Polyamidschicht und des Polyamidträgers hergestellt werden, in dem der textile Träger in die noch nicht versinterte Schicht eingelegt und die Schicht anschließend mit den eingelegten textilen Träger versintert wird. Demzufolge ist in einem bevorzugten erfindungsgemäßen Mehrschichtverbund die geschäumte oder kompakte Polyamidschicht ohne Zwischenschicht mit dem textilen Träger aus Polyamid verbunden.

Wenn die geschäumte oder kompakte Polyamidschicht in geschäumter Form ausgebildet ist, kann der Schaum als offenzelliger bzw. offenporiger oder geschlossenzelliger Schaum ausgebildet sein. Zur Ausbildung solcher Schäume können für die Herstellung der Polyamischicht beispielsweise physikalische Schaumhilfsmittel wie Mikrohohlkugeln (z.B. Expancell) einbezogen werden, oder die Masse zur Herstellung der Polyamidschicht kann mechanisch geschäumt werden, z.B. durch Einrühren von Luft oder einem Gas durch einen Schlagschaummischer. Geschäumte Polyamidschichten können mit einem Raumgewicht im Bereich von 0,15 bis 1,0 kg/L ausgebildet sein, und weisen meist ein Raumgewicht im Bereich von 0,3 bis 0,9 kg/L und bevorzugt 0,4 bis 0,75 kg/L auf.

Für die geschäumte oder kompakte Polyamidschicht ist es weiterhin bevorzugt, wenn sie mit einem Flächengewicht im Bereich von 5 bis 500 g/m² und vorzugsweise 20 bis 300 g/m² ausgebildet ist. Durch eine solches Flächengewicht kann der resultierende Mehrschichtverbund mit einer günstigen Beständigkeit gegenüber mechanischen Beanspruchungen ausgestattet werden. Alternativ, oder zusätzlich dazu kann die Polyamidschicht mit einer Dicke im Bereich von etwa 0,1 bis 1 mm, und insbesondere von etwa 0,3 bis 0,7 mm ausgebildet sein.

Eine weitere für den erfindungsgemäßen Mehrschichtverbund wünschenswerte Eigenschaft ist die Luftdurchlässigkeit, die vorzugsweise im Bereich von 1 bis 200 l/min/dm² liegt. Die Luftdurchlässigkeit wird maßgeblich von der kompakten oder geschäumten Polyamidschicht bestimmt wird, die so den Austausch von Gasen, Luft und Feuchtigkeit ermöglicht und in einem besonderen Wohlfühl- und Komfortverhalten resultiert.

Eine noch weitere für den erfindungsgemäßen Mehrschichtverbund wünschenswerte Eigenschaft für ein Kunstleder ist dessen Flexibilität, die bevorzugt für einen erfindungsgemäßen Mehrschichtverbund in Form eines Kunstleders bei mindestens 100.000 Faltbeanspruchungen (danach Bewertung i.O. Kunstleder, maximale Note 1, gemessen nach DIN 53 351- 2003) liegen sollte.

Zur Vermittlung eines visuellen und haptischen vorteilhaften Eindrucks ist die Oberfläche der geschäumte oder kompakte Polyamidschicht vorzugsweise strukturiert oder genarbt, wobei mit "Strukturierung" eine regelmäßige Struktur wie ein sich wiederholendes dreidimensionales Muster gemeint ist. Eine besondere Form der Strukturierung ist eine "Narbung" wobei unter Narbung eine Strukturierung zu verstehen ist, die der Benutzer der Strukturierung der Oberfläche der Haarseite von Leder zuordnet, kann vorliegend aber auch eine Oberflächenstrukturierung sein, die der Benutzer einem Spaltleder zuordnet. In eine bevorzugten Ausführungsform ist die Oberfläche der geschäumten oder kompakte Polyamidschicht in der Weise genarbt, dass der Benutzer die Oberflächenstruktur der Oberfläche der Haarseite von Leder zuordnet.

Neben den im Vorstehenden erwähnten Schichten kann der erfindungsgemäße Mehrschichtverbund weitere Schichten aufweise, die zum Erreichen des erfindungsgemäßen Ziels einer möglichst direkten Recyclingfähigkeit möglichst ebenfalls aus Polyamid als polymerem Material gebildet sind. In einer bevorzugten Ausführungsform umfasst der erfindungsgemäße Mehrschichtverbund zusätzlich eine Deckschicht auf Basis von Polyamid, die auf der dem textilen Träger aus Polyamid entgegengesetzten Seite der geschäumten oder kompakten Polyamidschicht angebracht ist. Eine solche Deckschicht liegt meist als kompakte Schicht vor und vermittelt dem Mehrschichtverbund eine geeignete Festigkeit und Widerstandfähigkeit gegenüber mechanischen Belastungen, wie beispielsweise Abriebfestigkeit.

Eine weitere Schicht, die in den erfindungsgemäßen Mehrschichtverbund einbezogen werden kann, ist eine Haftschicht, mit der die geschäumte oder kompakte Polyamidschicht mit dem textilen Träger aus Polyamid verbunden sein kann. In einer Ausführungsform weist der erfindungsgemäße Mehrschichtverbund demnach eine geschäumte oder kompakte Polyamidschicht auf, die mittels einer Haftschicht mit dem textilen Träger aus Polyamid verbunden ist. Eine solche Haftschicht ist bevorzugt aus thermoplastischem Polyurethan oder Polyamid gebildet.

Der Mehrschichtverbund kann demzufolge mehrere Schichten aufweisen, die aufeinander appliziert sind, wobei jede Schicht eine Funktion erfüllt. Beispielsweise kann eine erste kompakte oder atmungsaktive Schicht dem Mehrschichtverbund die Farbgebung, Narbgebung, Umwelteinflussbeständigkeit und Abriebverhalten vermitteln. Eine zweite geschäumte Schicht kann beispielsweise die für ein Kunstleder vom Verbraucher erwartete Weichheit und Haptik liefern, und eine dritte Schicht in Form eines Haftstrichs kann die Haftung zum textilen Träger bereitstellen.

Neben dem Basispolymer kann die geschäumte oder kompakte Polyamidschicht ein oder mehrerer Additive zur Eigenschaftssteuerung und -optimierung enthalten, die ausgewählt sind aus der Gruppe umfassend Stabilisatoren, Füllstoffe, Flammschutzmittel, Farbmittel und/oder Pigmente, Additive zur Vermittlung von thermischer Leitfähigkeit, Vernetzer, Verdicker, Verlaufshilfsmittel, Seifen und/oder Tenside, Rheologiehilfsmittel, Antioxidationsmittel, Zell-öffnende Mittel, Entschäumer und Schaumhilfsmittel.

Ein hierbei wichtiges Additiv ist sind z.B. Seifen/Tenside, die erforderlich sein können, um aus Polyamidpartikeln in Wasser eine über übliche Streichverfahren verarbeitbare Masse herzustellen. Geeignete hierzu einsetzbare Seifen und Tenside sind beispielsweise neutrale, anionische und/oder kationische einwertige und mehrwertige Seifen auf Basis von Carboxylgruppen, Polyethylenglykolen, Polyethern, Hydroxiverbindungen, Aminverbindungen, Phosphatverbindungen und Sulfatverbindungen. Seifen und Tenside liegen in der geschäumte oder kompakte Polyamidschicht meist mit einem Anteil von 0,01 bis 20 g pro 100 g Polymer vor. Bei der Zugabe der aufgeführten Seifen ist oft eine deutliche Reduktion der Viskosität der streichfähigen Masse feststellbar, sodass bereits geringe Mengen an Wasser zur Herstellung einer streichfähigen Masse ausreichend sind und auf weitere Lösungsmittel zusätzlich zum verwendeten Wasser verzichtet werden kann.

Weitere Additive, die zusätzlich oder alternativ zu Seifen/Tensiden zur Formulierung von streichbaren wässrigen Polymermassen zur Herstellung der geschäumten oder kompakten Polyamidschicht in diese einbezogen werden können, sind Emulgatoren.

Zudem können Entschäumungsmittel in der Polyamidschicht enthalten sein, wenn diese als kompakte Polyamidschicht ausgebildet ist. Geeignete Entschäumer, die in die geschäumte oder kompakte Polyamidschicht einbezogen sein können, sind beispielsweise Entschäumer auf Basis von Mineralölen, Alkoholen, Silikonverbindungen oder Fluorverbindungen. Durch diese Entschäumer wird die Schaumbildung unterdrückt, sodass bei Trocknung und Verschmelzung eine kompakte Schicht entsteht.

Stabilisatoren, die in der geschäumten oder kompakten Polyamidschicht enthalten sein können, sind Stabilisatoren, die die Temperaturbeständigkeit, UV- und Lichtstabilität sowie Hydrolysebeständigkeit verbessern, und Stabilisatoren, die den radikalischen Abbau reduzieren. Diese können beispielsweise auf Basis von Betadiketonen, Irganox^{®}, HALS oder calcium- und zinkbasierten Systemen vorliegen.

Flammschutzmittel, die in der geschäumte oder kompakte Polyamidschicht verwendet werden können, sind beispielsweise Flammschutzmittel auf Basis von Blähgraphit, Verbindungen auf Basis von Antimon, Aluminium, Magnesium, Bor, Zink, oder Salze auf Hydroxid-, Ammonium-, oder Phosphatbasis oder Oxide verwendet werden. Organische Verbindungen auf Basis von Strickstoff, Schwefel und Phosphor können ebenfalls Verwendung finden.

In der geschäumte oder kompakte Polyamidschicht verwendbare Füllstoffe sind z.B. Carbonate, wie Calciumcarbonat, Aluminiumverbindungen wie Aluminiumoxid, Bariumoxid, Bariumsulfate, Ruße, Silikate und Tonerden, die in unterschiedlichen Feinheiten verwendet werden können.

Rheologiehilfsmittel können verwendet werden, um eine höhere Viskosität bei der Herstellung der geschäumten oder kompakten Polyamidschicht zu realisieren, über die z.B. ein durch einschlagen eines Gases erzeugter Schaum zur Herstellung einer geschäumten Polyamidschicht stabilisiert werden kann. Auf diese Weise können Schäume auch bei höherer Temperatur stabil gehalten werden.

Zur Vermittlung von thermischer Leitfähigkeit verwendbare Additive sind z.B. Carbide, wie insbesondere Siliziumcarbid, Nitride oder Oxide.

Es ist weiterhin möglich, dass die Polyamide in einem vergleichsweise geringen Umfang, durch die die Aufschmelzbarkeit des Materials nicht in relevantem Umfang beeinträchtigt wird, vernetzt sind, wozu die geschäumte oder kompakte Polyamidschicht dann z.B. auch Elektronenstrahlvernetzungsadditive wie Taicross, oder Epoxid-, Isocyanat-, Carbodiimid- oder Melaminvernetzer enthalten kann (bzw. Polymeranteile, die auf eine Vernetzung mit solchen Vernetzern zurückgehen). Bevorzugt ist dabei eine Vernetzung mit Carbodiimiden, welche freie Carboxylgruppen der Polyamide kovalent miteinander verbinden. Wenn die Polyamide freie Carboxylgruppen nur an den Enden der Polymere aufweisen, liegt streng genommen keine Vernetzung, sondern eine Kettenverlängerung vor, die im Kontext der hier beschriebenen Erfindung aber ebenfalls als Vernetzung angesehen werden soll.

Zum Einfärben können Pigmente und Farbstoffe, die in fester Form (als Pulver) oder als wässrige Emulsion oder Dispersion eingesetzt werden können, sowie Effektpigmente wie Iriodine Verwendung finden. Ebenfalls können Quantumdots in die geschäumte oder kompakte Polyamidschicht einbezogen werden.

Zur Erzeugung von offenzelligen Schäumen kann die geschäumte Polyamidschicht auch zellöffnende Mittel enthalten, wie beispielsweise Seifen, die auf Ammoniumsulfonsäure basieren.

Die vorstehend genannten Additive können auch in anderen Schichten des erfindungsgemäßen Mehrschichtverbunds enthalten sein, beispielsweise in der Haftschicht oder einer auf Polyamid beruhenden Deckschicht.

Eine weitere Klasse von Schichten, die in dem erfindungsgemäßen Mehrschichtverbund enthalten sein können, sind Lackschichten. Lackschichten unterscheiden sich von den vorstehend bezeichneten Schichten in der Regel dadurch, dass sie deutlich dünner ausgebildet sind, als die vorstehend beschriebenen Schichten, und meist eine Schichtdicke von weniger als 12 µm und bevorzugt Schichtdicken im Bereich von etwa 3 bis etwa 10 µm aufweisen. Lacksysteme, die für eine Veredelung eines erfindungsgemäßen Mehrschichtverbundes verwendet werden können, sind beispielsweise Lacksysteme auf Basis von PVDF, PVC, Acrylaten, Polyamid, und Polyurethanen, wobei diese Lacksysteme insbesondere zur Haptikeinstellung und zur Verbesserung der Stabilität gegenüber mechanischen und chemischen Beständigkeit eingesetzt werden können. Derartige Lacke können beispielsweise durch Rasterwalzen, Sprühen, Streichen oder Gießen aufgetragen werden. Vernetzer, die in den Lacken verwendet werden können, sind ebenfalls Isocyanate, Carbodiimide, Epoxide und Melamine. Zusätzlich oder alternativ können UV-Lacksysteme verwendet eingesetzt werden, welche durch UV-Bestrahlung zur Vernetzung gebracht werden.

Neben textilen Trägern auf Basis von Geweben, Gewirken und Gestricken, kann der erfindungsgemäße Mehrschichtverbund auch funktionale System wie Velcro, Klettverschlüsse, oder ähnliche Systeme enthalten.

Wie bereits erwähnt lassen sich die geschäumte oder kompakte Polyamidschicht im erfindungsgemäßer Mehrschichtverbund zweckmäßig durch die Verarbeitung einer wässrigen Polyamiddispersion herstellen, wobei die Dispersion durch konventionelle Streichverfahren verarbeitbar ist, und durch Trocknen und anschließendes Sintern aus der Dispersion eine geschäumte oder kompakte Polyamidschicht erzeugt wird.

Ein weiterer Aspekt der vorliegenden Erfindung betrifft demzufolge ein Verfahren zur Herstellung eines Mehrschichtverbunds wie er im vorstehenden angegeben wurde, wobei das Verfahren zunächst einen Schritt des Bildens einer wässrigen Polyamid-Dispersion aus Polyamidpartikeln mit einer Partikelgröße im Bereich von 0,1 bis 250 µm umfasst, und daran anschließend die Schritte:
a1) Auftragen der Polyamid-Dispersion auf einen Träger;
b1) Erhitzen Polyamid-Dispersion, wobei Wasser entfernt und das Polyamid zu einer geschäumten oder kompakten Schicht gesintert wird; und
c1) Aufbringen eines textilen Trägers aus Polyamid auf die in B) hergestellte geschäumte oder kompakte Schicht

Eine alternative Möglichkeit besteht in einem Verfahren, bei dem der textile Träger nicht in einem gesonderten Schritt mit der in B hergestellten Polyamidschicht verbunden wird, sondern in dem das Verbinden gleichzeitig mit dem Schritt des Sinterns erfolgt. Demzufolge wird hier auch ein Verfahren zur Herstellung eines Mehrschichtverbunds wie er im vorstehenden angegeben wurde offenbart, das zunächst einen Schritt des Bildens einer wässrigen Polyamid-Dispersion aus Polyamidpartikeln mit einer Partikelgröße im Bereich von 0,1 bis 250 µm umfasst, und daran anschließend die Schritte
a2) Auftragen der Polyamid-Dispersion auf Träger;
b2) Einlegen eines textilen Trägers aus Polyamid in die aufgestrichene Polyamid-Dispersion; und
c2) Erhitzen der Polyamid-Dispersion, wobei Wasser entfernt und das Polyamid zu einer geschäumten oder kompakten Schicht gesintert wird; aufweist.

Wenn die Polyamidschicht durch mehrfaches Auftragen von Lagen der Polyamid-Dispersion mit anschließendem Trocknen und Sintern erzeugt wird, ist auch eine Kombination der Verfahren in der Weise möglich, dass erste Lagen der Polyamidschicht ohne einen eingelegten textilen Träger aus Polyamid hergestellt werden und der textile Träger erst nach Aufstreichen der letzten Lage der Polyamiddispersion in diese eingelegt und mit der schon teilweise gesinterten Polyamidschicht verarbeitet wird. "Sintern" bezeichnet vorliegend eine Temperaturbehandlung, bei der die Partikel zumindest anteilsmäßig miteinander verschmelzen, kann aber auch so durchgeführt werden, dass sich eine vollständig geschmolzene Schicht des Polyamids bildet.

Das Auftragen kann z.B. im Umkehrverfahren durch Luftrakel, Auftragswalze, Messer oder Druckwalze, oder via Sprühverfahren erfolgen. Als Substrate können glatte oder strukturierte Narbträger auf Polyolefinbasis, Acrylatbasis, Metallbasis, Silikonbasis oder auch auf modifiziertem Streichpapier verwendet werden. Ebenso ist es möglich, dass die Polyamiddispersion direkt auf den textilen Träger aufgebracht werden, wobei dann kein Substrat erforderlich ist.

Zur Herstellung von Polyamiddispersionen mit geeigneter Streichfähigkeit ist es bevorzugt, wenn die Dispersion aus eher kleineren Partikeln hergestellt wird. Als Zweckmäßig kann dabei eine Partikelgröße von kleiner 100 µm, weiter bevorzugt kleiner 80 µm und noch weiter bevorzugt kleiner 60 µm angegeben werden. Mit der "Partikelgröße" wird dabei die gewichtsmittlere Partikelgröße der Polyamidpartikel bezeichnet, die im Kontext der hier angegebenen Erfindung mittels Laserbeugung zu bestimmen ist.

Die Dispersionen enthalten neben den Polyamidpartikeln als weiteren Hauptbestandteil Wasser, wobei es jedoch nicht außerhalb des Rahmen der Erfindung liegt, wenn zusätzlich zu Wasser weitere Lösungsmittel in der Dispersion enthalten sind, oder wenn, in Einzelfällen, sogar die Dispersion in einem nicht wässrigen Lösungsmittel gebildet wird. Ersichtlich ist jedoch eine wässrige Dispersion, die nur geringe Anteile oder gar kein zusätzliches organisches Lösungsmittel enthält, aus Kostengründen und aus Gründen der bei der Trocknung der Dispersion entstehenden Lösungsmittelemissionen bevorzugt.

Der Anteil des Wassers in der Dispersion kann abhängig von den resultierenden und gewünschten Eigenschaften der Dispersion in Bezug auf deren Viskosität und Verarbeitungseigenschaften eingestellt werden, wobei ein möglichst geringer Wasseranteil aus Kostengründen bevorzugt ist. Meist wird für die Dispersion der Polyamidpartikel ein Wasseranteil von 30 bis 70 Gew.-%, bezogen auf die Gesamtmenge an Wasser und Polyamidpartikel in der Dispersion, eingestellt.

Wie vorstehend bereits erwähnt enthält die Polyamidpartikeldispersion zur Stabilisierung in der Regel mindestens ein Tensid/eine Seife oder eine Tensidmischung, die mit einem Anteil von 0,01 bis 20 g pro 100 g Polyamidpolymer in der Dispersion enthalten sein kann.

Das Aufbringen des textilen Trägers kann, wenn dies wie in Schritt C) als gesonderter Schritt durchgeführt wird, durch jedes geeignete Verfahren realisiert werden, z.B. durch flammkaschieren oder klebekaschieren des textilen Trägers auf die geschäumte oder kompakte Polyamidschicht. Es ist darüber hinaus möglich, dass die kompakte oder geschäumte Polyamidschicht mit dem textile Träger perforiert, gestanzt, vernäht und/oder verschweißt wird, wobei beim Verschweißen Träger und Polyamidschicht miteinander verschmelzen.

Wenn das Verfahren zur Herstellung eines Mehrschichtverbundes mit mehreren Schichten (d.h. z.B. eine kompakte Deckschicht und eine geschäumte Polyamidschicht) verwendet wird, oder eine dickere Schicht durch einen mehrfachen Auftrag einer Streichmasse mit anschließendem Trocknen und Sintern hergestellt wird, erfolgt der Auftrag der Schichten meist seriell in der Weise, dass ein Streichsystem die Masse aufbringt und die Masse dann durch einen entsprechenden Ofen oder Heizkanal geführt wird, welcher für die Vernetzung, das Schmelzen bzw. Fügen und das Gelieren verantwortlich ist. Dieser Prozess kann mehrmals wiederholt werden, bis die gewünschte Konstruktion erreicht wird.

Im Sinne einer Offenbarung als Aspekt der Erfindung beschrieben ist hier ebenfalls eine wässrige Polyamiddispersion, die gemäß den bestehend beschrieben Verfahren im Wesentlichen aus Wasser und Polyamidpartikeln mit einer Größe im Bereich von 0,1 bis 250 µm gebildet ist. Weitere Spezifizierungen, die vorstehend als bevorzugt für solche Dispersionen zur Verwendung in den angegebenen Verfahren beschrieben sind, gelten ebenfalls für diese wässrige Polyurethandispersion gemäß dem Aspekt als bevorzugt.

Die angegebenen Verfahren lassen sich dadurch vorteilhaft weiter ausgestalten indem die geschäumte oder kompakte Schicht mit einer strukturierten Oberfläche modifiziert wird, wobei es sich in einer Ausführungsforme um eine "genarbte" Oberfläche, insbesondere in Form einer Ledernarbe handelt. Eine solche Strukturierung oder Narbe kann verfahrenstechnisch z.B. dadurch erzeugt werden, dass die Dispersion auf einen Träger aufgebracht wird, der eine Oberflächenstruktur in Form des Negativs der auf der geschäumten oder kompakten Polyamidschicht zu erzeugenden Oberflächenstruktur aufweist, so dass sich die Struktur infolge des Sinterns des Polyamids ergibt. Alternativ dazu kann die Oberflächenstruktur oder Narbung aber auch durch Aufprägen erzeugt werden, z.B. in dem die Polyamidoberfläche bei einer Temperatur im Bereich von 140°C bis 280°C mit einem Prägewerkzeug behandelt wird.

Alternativ zu den vorstehend beschriebenen Verfahren, bei denen die kompakte oder geschäumte Polyamidschicht durch Verarbeitung einer wässrigen Dispersion von Polyamidpartikeln hergestellt wird, ist eine konventionelle Herstellung der Schicht in der Weise möglich, dass die zur Herstellung der Schicht verwendeten thermoplastischen Polymamide so modifiziert sind, dass sie sich als trockenes Pulver/Granulat über eine Extrusion und/oder einen Kalandrierprozess mit entsprechenden textilen Trägern auf Polyamidbasis kombinieren lassen. Die so erhaltenen Konstruktionen / Produkte lassen sich ebenso wie die über Streichmassen hergestellten Mehrschichtverbunde ganzheitlich in einen neuen Ausgangsrohstoff überführen.

Wenn der erfindungsgemäße Mehrschichtverbund als Kunstleder ausgebildet ist, d.h. wenn er dem Benutzer einen visuellen und haptischen Eindruck vergleichbar mit echtem Leder vermittelt, kann dieser für jeden dekorativen Zweck verwendet werden, für den Kunstleder eingesetzt werden. Demzufolge betrifft ein noch weiterer Aspekt der vorliegenden Erfindung eine Verwendung eines solchen Mehrschichtverbundes als Kunstleder zum Bezug von Oberflächen, bevorzugt im Innenraum eines Fahrzeugs oder für Möbel oder Wände. In einer Ausführungsform wird ein erfindungsgemäßer Mehrschichtverbund als Lenkrad-oder Gangschaltungsbalgbezug verwendet. In solchen Anwendungen kommt der der Beständigkeit des Mehrschichtverbunds gegenüber organischem Lösemittel und gegenüber Alltags-Oberflächenverschmutzungen wie z.B. Sonnencreme besondere Bedeutung zu, und es werden besondere Vorteile bei medizinische und hygienische Anwendung realisiert. In einer anderen Ausführungsform wird ein erfindungsgemäßer Mehrschichtverbund als Bezug einer Kofferraumabdeckung verwendet.

Generell weisen Polyamide zudem schon *per se* hohe Flammschutzstabilitäten auf, so dass sie insbesondere für eine Verwendung in Industrieapplikationen in Betracht kommen. Zudem ist der erfindungsgemäße Mehrschichtverbund im Vergleich zu anderen Kunstledern vergleichsweise leicht.

Wie vorstehend schon verschiedentlich erwähnt besteht ein wesentlicher Vorteil des erfindungsgemäßen Mehrschichtverbunds darin, dass eine aufwendige Material- und Schichtentrennung für ein Recycling nicht erforderlich ist, so dass der Verbund durch ein einfaches Aufschmelzen und Vermischen aller Bestandteile in einem Schritt verarbeitet werden kann. Feste Bestandteile, wie Füllstoffe oder Flammschutzmittel können dabei durch filtrieren der Schmelze von den polymeren Bestandteilen des Verbundes abgetrennt werden. Demzufolge betrifft ein noch weiterer Aspekt der vorliegenden Erfindung ein Verfahren zum Recyceln eines Mehrschichtverbundes, wie er im vorstehenden angegeben wurde, wobei der Mehrschichtverbund mittels einem Kalander- oder Extrusionsprozess aufgeschmolzen, und erhaltene feste Bestandteile gegebenenfalls aus der geschmolzenen Masse abfiltriert werden.

In einem noch weiteren Aspekt betrifft die vorliegende Erfindung ein Verfahren zum Recyceln eines Mehrschichtverbundes, wie er im vorstehenden angegeben wurde, wobei der Mehrschichtverbund chemisch depolymerisiert wird und die dadurch erhaltenen Monomere aus der Depolymersationsmischung isoliert werden. Eine solche chemische Depolymerisation umfasst beispielsweise in einem ersten Schritt eine alkalische Depolymerisation des Polyamids, z.B. mit Hilfe von Natriumhydroxid, gefolgt von einem zweiten Elektrolyseschritt, bei dem zunächst gebildetes Disäuresalz aus dem Polyamid zur korrespondierenden Säure umgewandelt und neues Natriumhydroxid, das dann in die Hydrolyse zurückgeführt werden kann, erzeugt wird (sh. z.B. Spektrum der Wissenschaft 12 / 1993, Seite 108).

Mit und durch gezielte modifizierte Polyamid-Rohstoffe kann auch ein Mehrschichtverbund hergestellt werden, der sich biologisch abbauen lässt. Die entsprechenden Monomere des Polyamids können in diesem Fall als Stickstofflieferant für Pflanzen genutzt werden.

Im Folgenden wird die vorliegende Erfindung anhand einiger Beispiele weiter illustriert, die jedoch nicht in irgendeiner Weise als beschränkend für den Schutzumfang der angegebenen Erfindung angesehen werden sollte.

Beispiel 1: Herstellung und Verarbeitung einer wässrigen Polyamiddispersion zur Herstellung von Polyamidfolien

Es wurde eine Polyamiddispersion mit den in der folgenden Tabelle angegebenen Inhaltsstoffen und mit einem Feststoffgehalt von -40% hergestellt.

| | |
|---|---|
| 100 g | Polymerpulver Polyamid bzw. Polyamidcopolymer, Partikelgröße 0 bis 80 µm |
| 150 g | Wasser |
| 0,2 g | Entschäumer und Verlaufshilfsmittel |
| 0,1 g | Dispergierhilfsmittel (Seife) |

Hierzu wurde Wasser als Medium vorgelegt und die Entschäumer, Verlaufsmittel und Dispergierhilfsmittel unter Rühren eingemischt. Anschließend wurde unter Rühren bei 500-1500 Umdrehung pro Minute das Polymerpulver schrittweise hinzugegen. Nach der vollständigen Zugabe wurde unter Vakuum 3 bis 5 min bei 2000-4000 Umdrehungen eine streichfähige Masse hergestellt.

Die so hergestellte Streichmasse wurden mit einem Spiralrakel auf ein Substrat aufgebracht, wobei jedoch ohne weiteres auch andere Auftragsverfahren wie ein Auftrag mittels Messerrakel, Gummituchrakel oder Luftrakel möglich ist. Anschließend wurde die erhaltene Dispersionsschicht in einem Ofen über mehrere Temperarturzonen zwischen 80-220 °C getrocknet. Für die Herstellung von dickeren Polyamidschichten können auch mehrere Dispersionsstriche erfolgen, wobei ein weiterer Dispersionsstrich jeweils nach Trocknung des vorherigen Dispersionsstrichs auf die getrocknete Polyamidschicht aufgebracht und dann ebenso getrocknet wird. Auf diese Weisen können gezielt gewünschte Schichtgewichte und -dicken eingestellt werden. Für die Herstellung eines Mehrschichtgebildes wurde im letzten Schritt das Polyamidtextil in die noch nicht getrocknete aber schon gestrichene Masse ein kaschiert und getrocknet.

## Patentansprüche

1. Mehrschichtverbund mit einer geschäumten oder kompakten Polyamidschicht und einem textilen Träger aus Polyamid, wobei die in dem Mehrschichtverbund enthaltenen Polymere zu mindestens 90 Gew.-% auf Polyamid oder Polyamid und thermoplastischen Polyurethan beruhen.

2. Mehrschichtverbund gemäß Anspruch 1, **dadurch gekennzeichnet, dass** das Polyamid, dass die geschäumte oder kompakten Polyamidschicht ausbildet, ein aliphatischen Polyamid ist, und bevorzugt ausgewählt ist aus der Gruppe umfassend PA 6, PA 6.6, PA 6.10, PA 6.12, PA 11, PA 12, Polycarenlactam, Polyamiden auf Basis von Bernsteinsäure, Adipinsäure, Azelainsäure, Sebacinsäure und Dodecandicarbonsäure, in Kombination mit Pentamethylendiamin oder Decamethylendiamin, Polyamiden aus Caprolactam und Aminoundecansäure und Polyamiden, die aus mehreren der in den vorstehend genannten Polyamiden enthaltenen Monomere gebildet sind.

3. Mehrschichtverbund gemäß Anspruch 1 oder 2, **dadurch gekennzeichnet, dass** der textile Träger auf PA 6, PA 6.6, PA 6.10, PA 6.12, PA 11, PA 12, oder Polycaprolactam als Fasermaterial beruht und/oder als Gestricke, Gewirke, Gelege, Vlies oder Gewebe ausgebildet ist.

4. Mehrschichtverbund gemäß mindestens einem der Ansprüche 1 bis 3, **dadurch gekennzeichnet, dass** die geschäumte oder kompakte Polyamidschicht ohne Zwischenschicht mit dem textilen Träger aus Polyamid verbunden ist oder wobei die geschäumte oder kompakte Polyamidschicht mittels einer aus thermoplastischem Polyurethan oder Polyamid gebildeten Haftschicht mit dem textilen Träger aus Polyamid verbunden ist.

5. Mehrschichtverbund gemäß mindestens einem der vorangehenden Ansprüche, **dadurch gekennzeichnet, dass** die geschäumte oder kompakte Polyamidschicht als offen- oder geschlossenzelliger Schaum ausgebildet ist.

6. Mehrschichtverbund gemäß mindestens einem der vorangehenden Ansprüche, **dadurch gekennzeichnet, dass** die geschäumte oder kompakte Polyamidschicht mit einem Flächengewicht im Bereich von 5 bis 500 g/m² und vorzugsweise 20 bis 300 g/m² ausgebildet ist.

7. Mehrschichtverbund gemäß mindestens einem der vorangehenden Ansprüche, **dadurch gekennzeichnet, dass** der Mehrschichtverbund eine Luftdurchlässigkeit im Bereich von 1 bis 200 l/min/dm² und/oder eine strukturierte und bevorzugt genarbte Oberfläche aufweist.

8. Mehrschichtverbund gemäß mindestens einem der vorangehenden Ansprüche, **dadurch gekennzeichnet, dass** der Mehrschichtverbund zusätzlich eine Deckschicht auf Basis von Polyamid aufweist, die auf der dem textilen Träger aus Polyamid entgegengesetzten Seite der geschäumten oder kompakten Polyamidschicht angebracht ist.

9. Mehrschichtverbund gemäß mindestens einem der vorangehenden Ansprüche, **dadurch gekennzeichnet, dass** der Mehrschichtverbund zusätzlich ein oder mehrere Lackschichten aufweist, die auf der geschäumten oder kompakten Polyamidschicht oder einer darauf aufgebrachten Deckschicht angebracht sind.

10. Mehrschichtverbund gemäß mindestens einem der vorangehenden Ansprüche, **dadurch gekennzeichnet, dass** die geschäumte oder kompakte Polyamidschicht ein oder mehrerer Additive ausgewählt aus der Gruppe umfassend Stabilisatoren, insbesondere HALS-Stabilisatoren, Füllstoffe, Flammschutzmittel, Farbmittel und/oder Pigmente, Additive zur Vermittlung von thermischer Leitfähigkeit, Vernetzer, Verdicker, Verlaufshilfsmittel, Seifen und/oder Tenside, Rheologiehilfsmittel, Antioxidationsmittel, Zell-öffnende Mittel, Entschäumer und Schaumhilfsmittel aufweist.

11. Verfahren zur Herstellung eines Mehrschichtverbunds gemäß einem der Ansprüche 1 bis 10 umfassend einen Schritt des Bildens einer wässrigen Polyamid-Dispersion aus Polyamidpartikeln mit einer Partikelgröße im Bereich von 0,1 bis 250 µm und bevorzugt 0,1 bis 100 µm; und entweder die Schritte
a1) Auftragen der Polyamid-Dispersion auf einen Träger;
b1) Erhitzen Polyamid-Dispersion, wobei Wasser entfernt und das Polyamid zu einer geschäumten oder kompakten Schicht gesintert wird;
c1) Aufbringen eines textilen Trägers aus Polyamid auf die in B) hergestellte geschäumte oder kompakte Schicht,
oder die Schritte
a2) Auftragen der Polyamid-Dispersion auf Träger;
b2) Einlegen eines textilen Trägers aus Polyamid in die aufgestrichene Polyamid-Dispersion; und
c2) Erhitzen der Polyamid-Dispersion, wobei Wasser entfernt und das Polyamid zu einer geschäumten oder kompakten Schicht gesintert wird;
oder die Schritte
a3) Auftragen der Polyamid-Dispersion auf einen textilen Träger aus Polyamid;
b3) Erhitzen der Polyamid-Dispersion, wobei Wasser entfernt und das Polyamid zu einer geschäumten oder kompakten Schicht gesintert wird;
aufweist.

12. Verfahren gemäß Anspruch 11, wobei für das Bilden der wässrigen Polyamid-Dispersion ein oder mehrere Tenside, bevorzugt mit einem Anteil von 0,01 bis 20 g pro 100 g Polymer, zugegeben werden oder die Polyamidpartikel zur Bildung einer Dispersion mit einer Polyurethandispersion gemischt werden.

13. Verfahren gemäß Anspruch 11 oder 12, wobei der textile Träger durch flammkaschieren oder klebekaschieren auf der geschäumten oder kompakten Polyamidschicht aufgebracht wird.

14. Verfahren nach mindestens einem der Ansprüche 11 bis 13, wobei die geschäumte oder kompakte Schicht dadurch mit einer strukturierten Oberfläche modifiziert wird, dass die Dispersion auf einen Träger aufgebracht wird, der eine Oberflächenstruktur in Form des Negativs der auf geschäumten oder kompakten Polyamidschicht zu erzeugenden Oberflächenstruktur aufweist, oder wobei diese Oberflächenstruktur durch aufprägen, bevorzugt bei einer Temperatur im Bereich von 140°C bis 280°C, auf die geschäumten oder kompakten Polyamidschicht aufgebracht wird, wobei die Oberflächenstruktur bevorzugt die Form einer Ledernarbe aufweist.

15. Wässrige Polyamiddispersion, die aus Wasser und Polyamidpartikeln mit einer Größe im Bereich von 0,1 bis 250 µm gebildet ist und einen Wasseranteil von 30 bis 70 Gew.-%, bezogen auf die Gesamtmenge an Wasser und Polyamidpartikeln in der Dispersion, aufweist.

16. Verwendung eines Mehrschichtverbundes nach mindestens einem der Ansprüche 1 bis 10 als Kunstleder zum Bezug von Oberflächen, bevorzugt im Innenraum eines Fahrzeugs oder für Möbel oder Wände.

17. Verfahren zum Recyceln eines Mehrschichtverbundes gemäß mindestens einem der Ansprüche 1 bis 10, wobei der Mehrschichtverbund mittels einem Kalander- oder Extrusionsprozess aufgeschmolzen, und erhaltene feste Bestandteile gegebenenfalls aus der geschmolzenen Masse abfiltriert werden, oder wobei der Schichtverbund chemisch depolymerisiert und die dadurch erhaltenen Monomere aus der Depolymersationsmischung isoliert werden.
